# EUROPEAN PATENT APPLICATION

(11) **EP 2 199 673 A2**
(43) Date of publication of application: **23.06.2010**
(21) Application number: 09015505.2
(22) Date of filing: 15.12.2009
(51) Int. Cl.: F23C 5/08, F23L 15/02, F23N 5/20

(54) **Combustion control method for regenerative-combustion heat treat furnace**

(30) Priority: 16.12.2008 JP 2008319593
(71) Applicant: Chugai Ro Co., Ltd., Chuo-ku Osaka-shi, Osaka (JP)
(72) Inventor: Kimoto, Yasuyuki, Osaka-shi Osaka (JP); Ueshima, Hirotoshi, Osaka-shi Osaka (JP)
(74) Representative: Glawe, Delfs, Moll

(57) **Abstract**

[Object] In a regenerative-combustion heat treat furnace which is provided with plural pairs of regenerative burners and an exhaust portion for discharging a part of the combustion exhaust gas in the heat treat furnace to the outside of the heat treat furnace, the combustion and the combustion stop of each pair of regenerative burners are properly controlled according to a combustion load in the heat treat furnace and the drop of utilization rate of heat in the heat treat furnace is suppressed.

[Solution] In a regenerative-combustion heat treat furnace 10 provided with plural pairs of regenerative burners 20 and an exhaust portion 13 for discharging a part of the combustion exhaust gas in the heat treat furnace 10 to the outside of the heat treat furnace, the plural pairs of regenerative burners are controlled by switching the paired regenerative burners between the combustion and the combustion stop according to a combustion load in the heat treat furnace. In this control, stop time is defined to be the longest at a regenerative burner pair adjacent to the exhaust portion and progressively decreased therefrom.

## Description

### [Related Application]

This application claims a priority from Japanese Patent Application No.2008-319593.

### [Technical Field]

The present invention relates to a regenerative-combustion heat treat furnace which is provided with plural pairs of regenerative burners arranged in a moving direction of a subject material in the heat treat furnace, the regenerative burner including a burner portion equipped with a fuel injection nozzle and a regenerator accommodating a heat storage material therein. The heat treat furnace is further provided with an exhaust portion for discharging a part of the combustion exhaust gas in the heat treat furnace to the outside of the heat treat furnace. Each pair of regenerative burners alternates between operations in a manner such that one regenerative burner of the pair performs a combustion operation by introducing a combustion air to the burner portion via the regenerator and injecting a fuel gas from the fuel injection nozzle of this burner portion while the other regenerative burner performs an operation of introducing the combustion exhaust gas into the regenerator accommodating the heat storage material and allowing the heat storage material to store heat from the combustion exhaust gas before discharging the combustion exhaust gas. Particularly, the invention is characterized by providing proper control of the combustion and the combustion stop of each pair of regenerative burners according to a combustion load in the heat treat furnace and suppressing the drop of utilization rate of heat in the heat treat furnace.

### [Background Art]

The regenerative-combustion heat treat furnace has heretofore been used for heat treating the subject material. The regenerative-combustion heat treat furnace is provided with the plural pairs of regenerative burners arranged in the moving direction of the subject material in the heat treat furnace, the regenerative burner including the burner portion equipped with the fuel injection nozzle and the regenerator accommodating the heat storage material therein. The heat treat furnace is further provided with the exhaust portion for discharging a part of the combustion exhaust gas in the heat treat furnace to the outside of the heat treat furnace. Each pair of regenerative burners alternates between the operations in a manner such that one regenerative burner of the pair performs the combustion operation by introducing the combustion air to the burner portion through the regenerator and injecting the fuel gas from the fuel injection nozzle of this burner portion while the other regenerative burner performs the operation of introducing the combustion exhaust gas into the regenerator accommodating the heat storage material and allowing the heat storage material to store the heat from the combustion exhaust gas before discharging the combustion exhaust gas.

It is noted here that it is necessary for such a regenerative-combustion heat treat furnace to vary the combustion load therein depending upon the type or size of the subject material or upon the purpose of treatment.

Therefore, as disclosed in Japanese Unexamined Patent Publication No.H8-35623, a combustion control method for regenerative-combustion heat treat furnace has been proposed wherein the combustion and the combustion stop of the plural pairs of regenerative burners disposed in the heat treat furnace are controlled according to the combustion load in the heat treat furnace and wherein with the decrease in the combustion load, the plural pairs of regenerative burners disposed in the heat treat furnace are sequentially switched to the combustion stop from a regenerative burner pair located at a predetermined position.

However, the following problem may occur in the case where with the decrease in the combustion load, the plural pairs of regenerative burners are sequentially switched to the combustion stop from the regenerative burner pair located at the predetermined position in the heat treat furnace. If the heat treatment continues in a state of low combustion load, some particular pair of regenerative burners is placed in the combustion stop for a long time. Hence, components of the fuel gas and combustion exhaust gas are accumulated on various change-over valves for switching to fuel supply to the regenerative burners, air supply to the regenerators and gas emission therefrom so that the change-over valves are disabled to work properly when the combustion is restarted.

In the related art, the combustion and the combustion stop of the plural pairs of regenerative burners disposed in the heat treat furnace are controlled according to the combustion load in the heat treat furnace. As disclosed in Japanese Patent Publication No.3562142, the following control method is also proposed. In conjunction with switching the plural pairs of regenerative burners to the combustion stop when the combustion load is decreased, the regenerative burners to be switched to the combustion stop are changed in given cycles so as to equalize combustion times of the individual regenerative burners. Thus is provided a homogeneous temperature distribution in the heat treat furnace.

However, the following problem exists in the case where the combustion load is decreased and the regenerative burner pairs to be switched to the combustion stop are changed in the given cycles so as to equalize the combustion times of the individual regenerative burners disposed in the heat treat furnace. In this case, a combustion time of a regenerative burner adjacent to the exhaust portion for discharging a part of the combustion exhaust gas in the heat treat furnace to the outside of the heat treat furnace is as long as a combustion time of a regenerative burner far away from the exhaust portion. A high-temperature combustion exhaust gas resulting from the combustion in the regenerative burner adjacent to the exhaust portion is immediately led out of the heat treat furnace via the exhaust portion. This leads to a significant decrease in the utilization rate of heat in the heat treat furnace.

### [Disclosure of the Invention]

### [Problems to Be Solved by the Invention]

The invention addresses the above-described problems encountered by the regenerative-combustion heat treat furnace when controlling the combustion and combustion stop of the respective pairs of regenerative burners according to the combustion load in the heat treat furnace. The regenerative-combustion heat treat furnace is provided with the plural pairs of regenerative burners arranged in the moving direction of the subject material in the heat treat furnace, the regenerative burner including the burner portion equipped with the fuel injection nozzle and the regenerator accommodating the heat storage material therein. The heat treat furnace is further provided with the exhaust portion for discharging a part of the combustion exhaust gas in the heat treat furnace to the outside of the heat treat furnace. Each pair of regenerative burners alternates between the operations in a manner such that one regenerative burner of the pair performs the combustion by introducing the combustion air to the burner portion via the regenerator and injecting the fuel gas from the fuel injection nozzle of this burner portion while the other regenerative burner introduces the combustion exhaust gas into the regenerator accommodating the heat storage material and allows the heat storage material to store the heat from the combustion exhaust gas before discharging the combustion exhaust gas.

In the above-described regenerative-combustion heat treat furnace, the invention seeks to achieve the following objects in controlling the combustion and combustion stop of the respective pairs of regenerative burners according to the combustion load in the heat treat furnace. In the case where the heat treatment continues in the state of low combustion load, the invention prevents the prolongation of only the stop time of some particular regenerative burners and suppresses the accumulation of the fuel gas components and the combustion exhaust gas components on the various changeover valves for switching to fuel supply to the regenerative burners, air supply to the regenerators and gas emission therefrom. Furthermore, the invention prevents the high-temperature combustion exhaust gas, resulting from the combustion in the regenerative burner adjacent to the exhaust portion, from being immediately led out of the heat treat furnace via the exhaust portion. Thus is prevented the drop of utilization rate of heat in the heat treat furnace.

### [Means for Solving the Problems]

In accordance with the invention, the above objects are accomplished in a combustion control method for regenerative-combustion heat treat furnace which is provided with plural pairs of regenerative burners arranged in a moving direction of a subject material in the heat treat furnace, the regenerative burner including a burner portion equipped with a fuel injection nozzle and a regenerator accommodating a heat storage material therein, and with an exhaust portion for discharging a part of the combustion exhaust gas in the heat treat furnace to the outside of the heat treat furnace and in which each pair of regenerative burners alternates between operations in a manner such that one regenerative burner of the pair performs combustion by introducing a combustion air to the burner portion via the regenerator and injecting a fuel gas from the fuel injection nozzle of this burner portion while the other regenerative burner introduces the combustion exhaust gas into the regenerator accommodating the heat storage material and allows the heat storage material to store heat from the combustion exhaust gas before discharging the combustion exhaust gas, the combustion control method wherein in conjunction with controlling the plural pairs of regenerative burners by switching the paired regenerative burners between combustion and combustion stop according to a combustion load in the heat treat furnace, stop time is defined to be the longest at a regenerative burner pair adjacent to the exhaust portion and progressively decreased therefrom.

In the above-described regenerative-combustion heat treat furnace, the exhaust portion for discharging a part of the combustion exhaust gas to the outside of the heat treat furnace is generally disposed near an inlet allowing the subject material to be introduced into the heat treat furnace. Therefore, the stop time is defined to be the longest at the regenerative burner pair adjacent to the exhaust portion on the inlet side and progressively decreased therefrom.

In controlling the plural pairs of regenerative burners by switching the paired regenerative burners between the combustion and the combustion stop, the stop time can be controlled by changing the number of times to switch the respective pairs of regenerative burners to the combustion or the combustion stop.

### [Advantageous Effects of the Invention]

In the combustion control method for regenerative-combustion heat treat furnace according to the invention, the plural pairs of regenerative burners are controlled by switching the paired regenerative burners between the combustion and the combustion stop according to the combustion load in the heat treat furnace, as described above. Even in the case where the heat treatment continues in the state of low combustion load, therefore, the prolongation of only the stop time of the particular regenerative burner is prevented. Hence, the accumulation of the fuel gas components and the combustion exhaust gas components on the various change-over valves for switching to fuel supply to the regenerative burners, air supply to the regenerators and gas emission therefrom is suppressed so that these change-over valves are prevented from being disabled to work properly at the restart of combustion.

In the combustion control method for regenerative-combustion heat treat furnace according to the invention, the plural pairs of regenerative burners are controlled by switching the paired regenerative burners between the combustion and the combustion stop according to the combustion load in the heat treat furnace, as described above. In this control, the stop time is defined to be the longest at the regenerative burner pair adjacent to the exhaust portion and progressively decreased therefrom. Therefore, the combustion time of the regenerative burner adjacent to the exhaust portion is decreased so that the proportion of the high-temperature combustion exhaust gas resulting from the combustion in this regenerative burner and immediately led out of the heat treat furnace via the exhaust portion is decreased. In consequence, the significant drop of utilization rate of heat in the heat treat furnace is prevented.

These and other objects, advantages and features of the invention will become apparent from the following description thereof taken in conjunction with the accompanying drawings.

### [Best Modes for Carrying Out the Invention]

A combustion control method for regenerative-combustion heat treat furnace according to an embodiment of the invention will be specifically described as below with reference to the accompanying drawings. It is to be noted that the combustion control method for regenerative-combustion heat treat furnace according to the invention is not particularly limited to the embodiment disclosed hereinbelow but may be embodied in any other suitable forms without departing from the spirit or essential characteristics thereof.

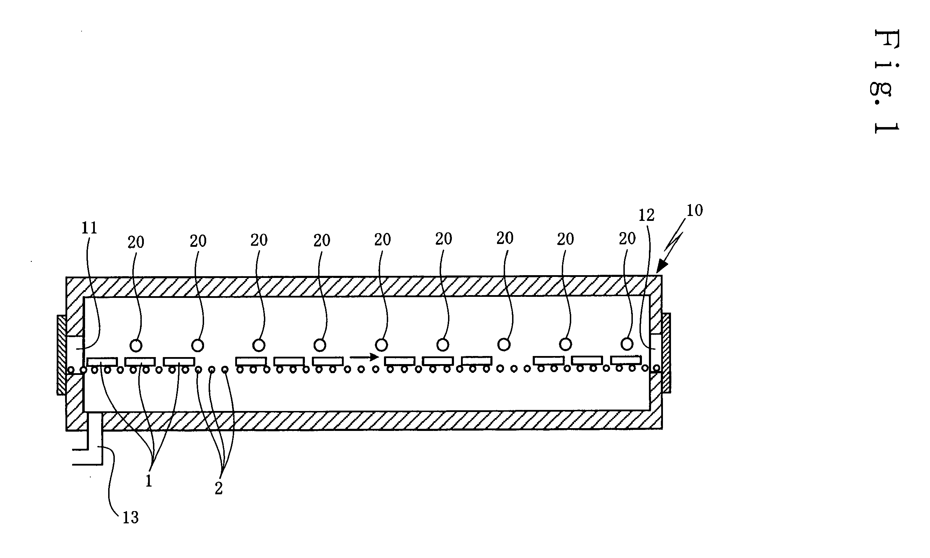

According to the embodiment, as shown in Fig.1, a subject material 1 formed of a steel material is introduced into a heat treat furnace 10 through an inlet 11 of the heat treat furnace 10. The subject material is heat treated while being transported by transport rollers 2 through the heat treat furnace 10. The subject material 1 thus heat treated is taken out of the heat treat furnace 10 through an outlet 12 of the heat treat furnace 10.

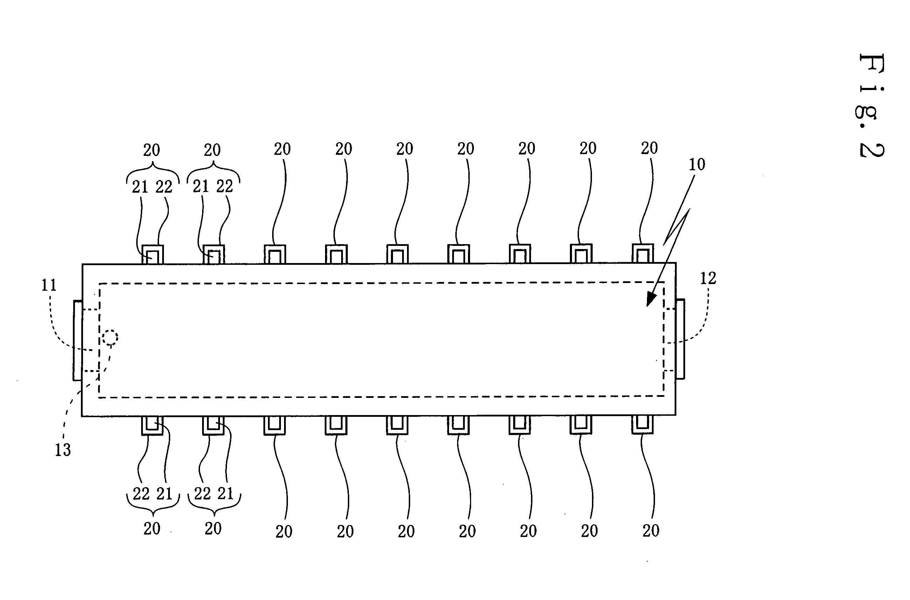

According to the embodiment as shown in Fig.1 and Fig.2, the heat treat furnace 10 is provided with an exhaust portion 13 in the vicinity of the inlet 11 thereof. The exhaust portion discharges a part of the combustion exhaust gas in the heat treat furnace 10 to the outside of the heat treat furnace 10. The heat treat furnace 10 is further provided with plural pairs of regenerative burners 20 arranged in a moving direction of the subject material 1. The paired regenerative burners 20 are disposed in face-to-face relation. The regenerative burner 20 includes a burner portion 21 and a regenerator 22.

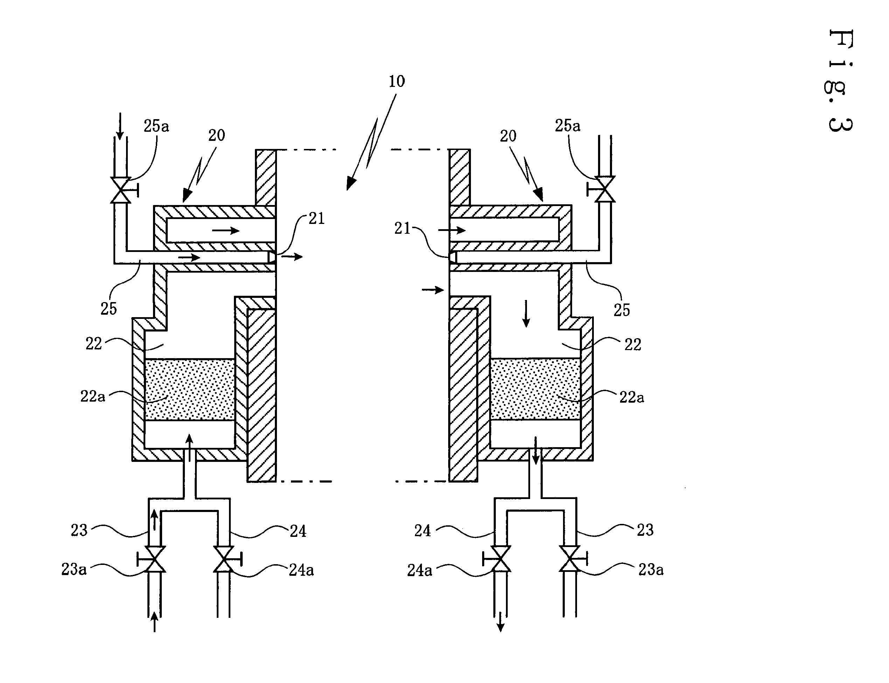

In the pair of regenerative burners 20, operations are performed as follows. As shown in Fig.3, one regenerative burner 20 of the pair opens an air feeding valve 23a which is disposed in an air feed pipe 23 for feeding a combustion air to the regenerator 22 accommodating a heat storage material 22a therein. On the other hand, a gas discharging valve 24a is closed, which valve is disposed in an exhaust gas discharge pipe 24 for discharging the combustion exhaust gas via the regenerator 22. The combustion air introduced into the regenerator 22 through the air feed pipe 23 is heated in the regenerator 22. The combustion air thus heated is fed to the burner portion 21 while a fuel gas is injected from a fuel injection nozzle 25 by opening a gas feeding valve 25a for feeding the fuel gas to the fuel injection nozzle 25 disposed at the burner portion 21. Thus, the fuel gas is combusted in the heat treat furnace 10.

In the other regenerative burner 20, on the other hand, the combustion is disabled by closing the gas feeding valve 25a for feeding the fuel gas to the fuel injection nozzle 25. The air feeding valve 23a disposed in the air feed pipe 23 is closed while the gas discharging valve 24a disposed in the exhaust gas discharge pipe 24 is opened. The exhaust gas discharge pipe serves to discharge the combustion exhaust gas via the regenerator 22. The combustion exhaust gas resulting from the combustion in the heat treat furnace 10 is sucked into the regenerator 22 so as to allow the heat storage material 22a accommodated in the regenerator 22 to store heat from the combustion exhaust gas. Subsequently, the combustion exhaust gas allowed to cool by giving off the heat to be stored by the heat storage material 22a is discharged to the outside via the exhaust gas discharge pipe 24.

In each pair of regenerative burners 20 described above, the one regenerative burner 20 performs the combustion by injecting the fuel gas from the fuel injection nozzle 25 while the other regenerative burner 20 introduces the combustion exhaust gas into the regenerator 22 and allows the heat storage material 22a to store the heat from the combustion exhaust gas before discharging the combustion exhaust gas. These regenerative burners are adapted to alternate between these operations.

In the combustion control method for regenerative-combustion heat treat furnace according to the embodiment, the plural pairs of regenerative burners 20 are controlled by switching the paired regenerative burners between the combustion and the combustion stop in a case where the type, size or the like of the subject material 1 to be heat treated in the heat treat furnace 10 is changed so that the combustion load in the heat treat furnace 10 is varied. In this control, the stop time is defined to be the longest at a regenerative burner pair 20 adjacent to the exhaust portion 13 disposed near the inlet 11 of the heat treat furnace 10 and progressively decreased therefrom such that the proportion of the high-temperature combustion exhaust gas resulting from the combustion in the regenerative burner 20 and immediately led out of the heat treat furnace via the exhaust portion 13 is reduced.

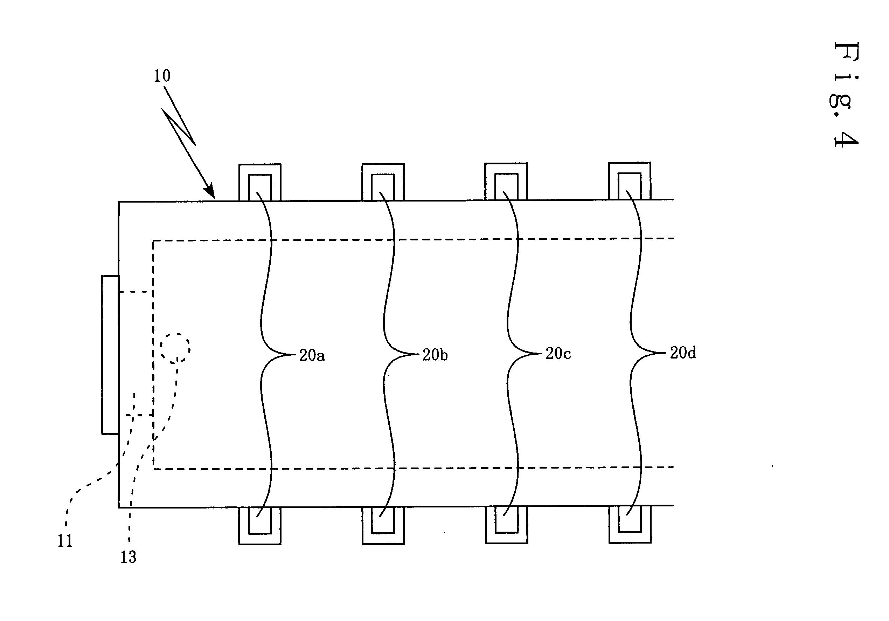

Now description is made on an example where, as shown in Fig.4, four pairs of regenerative burners 20a, 20b, 20c, 20d located in order of increasing distance from the exhaust portion 13 are controlled by switching the paired regenerative burners between the combustion and the combustion stop in the case where the combustion load in the heat treat furnace 10 is varied as described above.

In the case where the combustion load in the heat treat furnace is decreased so that the combustion in a pair of regenerative burners is stopped, as described above, the control is provided as shown in the following table 1, for example. The paired regenerative burners 20a located nearest to the exhaust portion 13 are placed in four combustion stops. The paired regenerative burners 20b located second nearest to the exhaust portion 13 are placed in three combustion stops. The paired regenerative burners 20c located third nearest to the exhaust portion 13 are placed in two combustion stops. The paired regenerative burners 20d located fourth nearest to the exhaust portion 13 are placed in one combustion stop. These operations are repeated as required. It is noted that the number of combustions shown in the following table 1 represents the number of sets of combustion and emission operations performed by the paired regenerative burners 20 which are alternately switched to the combustion operation and the emission operation. The control of the regenerative burners is facilitated by controlling the stop time based on the number of combustions.

**[Table 1]**

| Number of combustions | Regenerative burners in order of increasing distance from exhaust portion and combustion controls thereof | | | |
|---|---|---|---|---|
| | The nearest 20a | The second nearest 20b | The third nearest 20c | The fourth Nearest 20d |
| 1 | combustion stop | combustion | combustion | combustion |
| 2 | combustion stop | combustion | combustion | combustion |
| 3 | combustion stop | combustion | combustion | combustion |
| 4 | combustion stop | combustion | combustion | combustion |
| 5 | combustion | combustion stop | combustion | combustion |
| 6 | combustion | combustion stop | combustion | combustion |
| 7 | combustion | combustion stop | combustion | combustion |
| 8 | combustion | combustion | combustion stop | combustion |
| 9 | combustion | combustion | combustion stop | combustion |
| 10 | combustion | combustion | combustion | combustion stop |
| 11 | combustion stop | combustion | combustion | combustion |

The timings or the numbers of times to switch the four pairs of regenerative burners 20a, 20b, 20c, 20d to the combustion stop are not particularly limited to the above. So long as the stop time is the longest at the pair of regenerative burners 20 located nearest to the exhaust portion 13 and progressively decreased therefrom, the timings and the numbers of times to place the four pairs of regenerative burners 20a, 20b, 20c, 20d in the combustion stop can be changed. It is also possible to control paired regenerative burners 20 located even farther away from the exhaust portion 13 to be switched between the combustion and the combustion stop.

In the case where the heat treatment continues in the state of low combustion load, this approach obviates the problem that only some particular pair of regenerative burners 20 is placed in the combustion stop for a long time. Hence, the fuel gas components or combustion exhaust gas components are prevented from accumulating on the gas feeding valves 25a for feeding the fuel gas to such a pair of regenerative burners 20 or on the air feeding valves 23a for switching to air supply to the regenerators 22 and on the gas discharging valves 24a for switching to gas emission from the regenerators 22. These valves 23a, 24a, 25a are prevented from being disabled to work properly at the restart of combustion.

The stop time is defined to be the longest at the regenerative burner pair 20 adjacent to the exhaust portion 13 and progressively decreased therefrom. Therefore, the proportion of the combustion exhaust gas resulting from the combustion in the regenerative burner pair adjacent to the exhaust portion 13 and immediately led out of the heat treat furnace 10 via the exhaust portion 13 is reduced. In consequence, the drop of utilization rate of heat in the heat treat furnace is also avoided.

### [Brief Description of the Drawings]

[Fig.1] Fig.1 is a schematic sectional view showing an internal arrangement of a heat treat furnace providing control based on a combustion control method for regenerative-combustion heat treat furnace according to one embodiment of the invention;
[Fig.2] Fig.2 is a schematic plan view of the above heat treat furnace according to the above embodiment;
[Fig.3] Fig.3 is a schematic sectional view showing the conditions of a pair of regenerative burners in the above heat treat furnace according to the above embodiment; and
[Fig.4] Fig.4 is a schematic diagram illustrating four pairs of regenerative burners located in order of increasing distance from an exhaust portion and controlled based on the combustion control method for regenerative-combustion heat treat furnace according to the above embodiment.

### [Reference Characters List]

1: Subject material, 2: Transport roller
10: Heat treat furnace, 11: Inlet, 12: Outlet,
13: Exhaust portion
20, 20a, 20b, 20d: Regenerative burner
21: Burner portion
22: Regenerator, 22a: Heat storage material
23: Air feed pipe, 23a: Air feeding valve
24: Exhaust gas discharge pipe, 24a: Gas discharging valve
25: Fuel injection nozzle, 25a: Gas feeding valve

## Claims

1. In a regenerative-combustion heat treat furnace which is provided with plural pairs of regenerative burners arranged in a moving direction of a subject material in the heat treat furnace, the regenerative burner including a burner portion equipped with a fuel injection nozzle and a regenerator accommodating a heat storage material therein, and with an exhaust portion for discharging a part of the combustion exhaust gas in the heat treat furnace to the outside of the heat treat furnace and in which each pair of regenerative burners alternates between operations in a manner such that one regenerative burner of the pair performs combustion by introducing a combustion air to the burner portion via the regenerator and injecting a fuel gas from the fuel injection nozzle of this burner portion while the other regenerative burner introduces the combustion exhaust gas into the regenerator accommodating the heat storage material and allows the heat storage material to store heat from the combustion exhaust gas before discharging the combustion exhaust gas, a combustion control method for regenerative-combustion heat treat furnace wherein in conjunction with controlling the plural pairs of regenerative burners by switching the paired regenerative burners between combustion and combustion stop according to a combustion load in the heat treat furnace, stop time is defined to be the longest at a regenerative burner pair adjacent to the exhaust portion and progressively decreased therefrom.

2. The combustion control method for regenerative-combustion heat treat furnace according to Claim 1, wherein the exhaust portion for discharging a part of the combustion exhaust gas to the outside of the heat treat furnace is disposed near an inlet allowing the subject material to be introduced into the heat treat furnace and the stop time is defined to be the longest at the regenerative burner pair adjacent to the exhaust portion on the inlet side and progressively decreased therefrom.

3. The combustion control method for regenerative-combustion heat treat furnace according to Claim 1 or 2, wherein in conjunction with controlling the plural pairs of regenerative burners by switching the paired regenerative burners between the combustion and the combustion stop, the stop time is controlled by changing the number of times to switch the respective pairs of regenerative burners to the combustion or the combustion stop.
